# DEMANDE DE BREVET EUROPEEN

(11) **EP 0 848 939 A1**
(43) Date de publication de la demande: **24.06.1998**
(21) Numéro de dépôt: 97402987.8
(22) Date de dépôt: 10.12.1997
(51) Int. Cl.: A61G 5/10, B62B 5/00

(54) **Ensemble utilitaire pour personne à mobilité réduite comprenant un fauteuil roulant et un chariot de transport**

(30) Priorité: 11.12.1996 FR 9615211
(71) Demandeur: Pucheral, Micheline, 94190 Villeneuve St-Georges (FR); Pucheral, Yves, 94190 Villeneuve Saint Georges (FR); Soulier, Daniel, 30000 Nîmes (FR); Weynachter, Martine, 30000 Nîmes (FR)
(72) Inventeur: Pucheral, Micheline, 94190 Villeneuve St-Georges (FR); Weynachter, Martine, 30000 Nimes (FR); Pucheral, Yves, 94190 Villeneuve St-Georges (FR); Planard, Philippe, 92700 Colombes (FR); Soulier, Daniel, 3000 Nimes (FR)
(74) Mandataire: Robert, Jean-Pierre

(57) **Abrégé**

Ensemble utilitaire pour personne à mobilité réduite comprenant un fauteuil roulant (1) et un chariot de transport (9) dont une partie arrière comporte des moyens d'appui (12) sur le sol et est attelable de manière détachable à une partie avant du fauteuil (1), la partie avant du fauteuil (1) et la partie arrière du chariot (9) comportant des moyens spécifiques d'attelage (15, 16) en correspondance les uns des autres de sorte que la partie arrière du chariot (9) soit maintenue attelée au fauteuil (1) dans une position où les moyens d'appui (12) sont écartés du sol.

## Description

L'invention concerne un ensemble utilitaire pour personne à mobilité réduite comprenant un fauteuil roulant et un chariot de transport, un tel ensemble pouvant être utilisé notamment dans des centres commerciaux par des personnes handicapées physiquement définitivement ou temporairement, ou par des personnes âgées.

Les évolutions des personnes à mobilité réduite dans les centres commerciaux sont pénibles et problématiques, notamment du fait des trajets à parcourir et des difficultés liées au transport des achats. De ce fait les personnes handicapées ou à mobilité réduite renoncent à fréquenter les centres commerciaux.

A partir de ce constat, on a proposé de mettre à la disposition des personnes se déplaçant en fauteuil roulant des chariots de transport de leurs achats attelables au fauteuil roulant. Des exemples de ces dispositifs sont illustrés par les documents FR-A-2.573.379 et WO 84/01335.

Ces tentatives ont finalement échoué pour plusieurs raisons. La première raison tient au fait que les chariots attelables s'adressent uniquement aux personnes qui disposent de leur propre fauteuil roulant et qui ont le courage ou la volonté de faire leurs courses elles-mêmes. Il s'agit en fait là d'une clientèle extrêmement minoritaire qui, d'un point de vue économique, ne présente qu'un intérêt limité. La seconde raison tient au fait que dans la stratégie poursuivie, les moyens d'attelage chariot/fauteuil doivent être le plus "universel" possible pour tenir compte de la grande diversité des fauteuils. Il s'ensuit une complexité de ces attelages et une mise en oeuvre malaisée. Enfin, l'attelage ainsi réalisé est encombrant et difficile à manoeuvrer si bien qu'il est très vite délaissé par la clientèle qui pourrait en profiter.

La présente invention résulte d'une analyse totalement différente du besoin à satisfaire. On s'est en effet aperçu que le besoin concerne, outre les personnes handicapées possédant un fauteuil, toute personne dont la mobilité est diminuée du fait de l'âge, d'une maladie, d'un accident... et qui possède des facultés de déplacement autonome sur de courtes distances seulement ou sans avoir à porter de charges. La mise à disposition d'une chaise roulante constitue pour ces personnes un accroissement de confort qui leur permet une plus grande capacité de déplacement sans excès de fatigue. Cette chaise peut bénéficier d'un aspect fort différent de celui "médicalisé" des fauteuils roulants car les conditions de son usage (espace, sol uniforme....) sont parfaitement définies et constituent des contraintes beaucoup moins exigeantes que celles auxquelles doit satisfaire un fauteuil tous usages. Cette chaise peut donc être construite sur un modèle unique et peut être complétée par un chariot porte-charge qui peut lui être entièrement dédié pour former un ensemble utilitaire extrêmement pratique d'usage.

L'invention a pour objet cet ensemble utilitaire pour personne à mobilité réduite qui comprend un fauteuil roulant et un chariot de transport dont une partie arrière comporte des moyens d'appui sur le sol et est attelable de manière détachable à une partie avant du fauteuil, caractérisé en ce que la partie avant du fauteuil et la partie arrière du chariot comportent des moyens spécifiques d'attelage en correspondance les uns des autres de sorte que la partie arrière du chariot est maintenue attelée au fauteuil dans une position où les moyens d'appui sont écartés du sol.

L'attelage peut préserver un degré de liberté entre le chariot et ce fauteuil autour d'un axe vertical d'articulation mais dans son mode de réalisation préféré il constituera une liaison rigide entre eux, au moins en regard de sollicitation latérale (une possibilité de débattement du chariot par rapport au fauteuil peut subsister autour d'un axe horizontal transversal au chariot au niveau de l'articulation).

Le support de la partie arrière du chariot par le fauteuil, écartée du sol, présente de nombreux avantages.

Tout d'abord, le soulèvement des moyens d'appui du chariot de transport permet un chevauchement partiel de la partie avant du fauteuil par la partie arrière du chariot de transport. Ceci permet une diminution des encombrements longitudinal et transversal de l'ensemble utilitaire. En outre, le nombre d'appuis au sol de l'ensemble utilitaire est réduit permettant ainsi une meilleure manoeuvrabilité.

En outre, les moyens d'appui au sol à l'arrière du chariot peuvent être déportés vers l'arrière de sorte que la partie avant du fauteuil est logée entre eux lors de l'attelage. Il est alors possible de placer des poignées de manoeuvre du chariot dans une zone supérieure de celui-ci dont la projection au sol est comprise entre les appuis avant et arrière du chariot. Ainsi, l'usager du fauteuil peut aisément prendre appui sur ces poignées sans risque de basculement du chariot pour par exemple s'installer dans ou s'extraire de son fauteuil. Le chariot, s'il est équipé à sa base d'appuis roulants peut alors faire office d'appareil d'aide à la marche du genre déambulateur.

A l'avant, le chariot peut être équipé d'une ou de deux roues pivotantes autour d'un axe vertical. A l'arrière les moyens d'appuis peuvent être de simples béquilles ou également des roues pivotantes ou non.

Dans un mode de réalisation de l'invention, les moyens d'attelage spécifiques prévus en correspondance entre le fauteuil et le chariot comportent des moyens de came qui glissent les uns sur les autres lors d'un rapprochement du chariot et du fauteuil et des moyens d'encliquetage qui coopèrent entre eux après les moyens de came dans le sens de l'attelage. Ainsi l'attelage est réalisé par simple rapprochement du chariot et du fauteuil que peut aisément assurer l'usager assis dans le fauteuil. Il est avantageux de prévoir des moyens simples pour assurer le dételage du chariot. Selon l'invention pour ce faire, les moyens d'encliquetage sont à verrouillage automatique et déverrouillage manuel.

De nombreuses variantes de réalisation sont donc possibles. Par exemple une variante consiste en ce que les moyens d'encliquetage comportent un cliquet pivotant porté par le fauteuil et rappelé élastiquement dans une première position stable de verrouillage et une seconde position stable de libération de l'attelage, et une plaque à encoche portée par le chariot. La libération mutuelle des organes d'encliquetage est réalisée en faisant passer le cliquet de sa première position stable de verrouillage vers sa seconde position stable de libération, ce pivotement pouvant être commandé par au moins une poignée activable par l'usager, ou par la poursuite du rapprochement du chariot et du fauteuil provoquant le glissement du cliquet sur une surface de glissement en arrière de l'encoche dans le sens de l'attelage, ce glissement entraînant le pivotement du cliquet vers sa seconde position stable.

D'autres caractéristiques et avantages de l'invention ressortiront à la lecture de la description qui suit de trois modes de réalisation particuliers non limitatifs de l'invention, en relation avec les figures parmi lesquelles :
- la figure 1 est une vue simplifiée de côté d'un mode de réalisation de l'invention,
- la figure 2 est une vue simplifiée de côté d'un second mode de réalisation avant attelage,
- la figure 3 est une vue simplifiée de côté du second mode de réalisation après attelage,
- la figure 4 est une vue en perspective d'un troisième mode de réalisation,
- la figure 5 est une vue partielle en perspective des moyens spécifiques d'attelage du chariot de transport et du fauteuil selon le troisième mode de réalisation avant attelage.

En référence aux figures, l'ensemble utilitaire selon l'invention comporte un fauteuil roulant généralement désigné en 1.

Le fauteuil roulant 1 comprend une armature 2 portée par deux roues avant 3 orientables autour d'un axe vertical et deux roues arrière 4 parallèles et fixes.

Le corps d'un vérin pneumatique non représenté est solidaire de l'armature 2, tandis que la tige de ce vérin est solidaire d'une coque 5. La coque 5 est réalisée en matière plastique et constitue l'assise, le dossier et les accoudoirs du fauteuil roulant 1. Une manette 7 est disposée près de la coque 5 et est reliée au vérin pour l'actionner de façon à régler la hauteur de l'assise du fauteuil roulant 1.

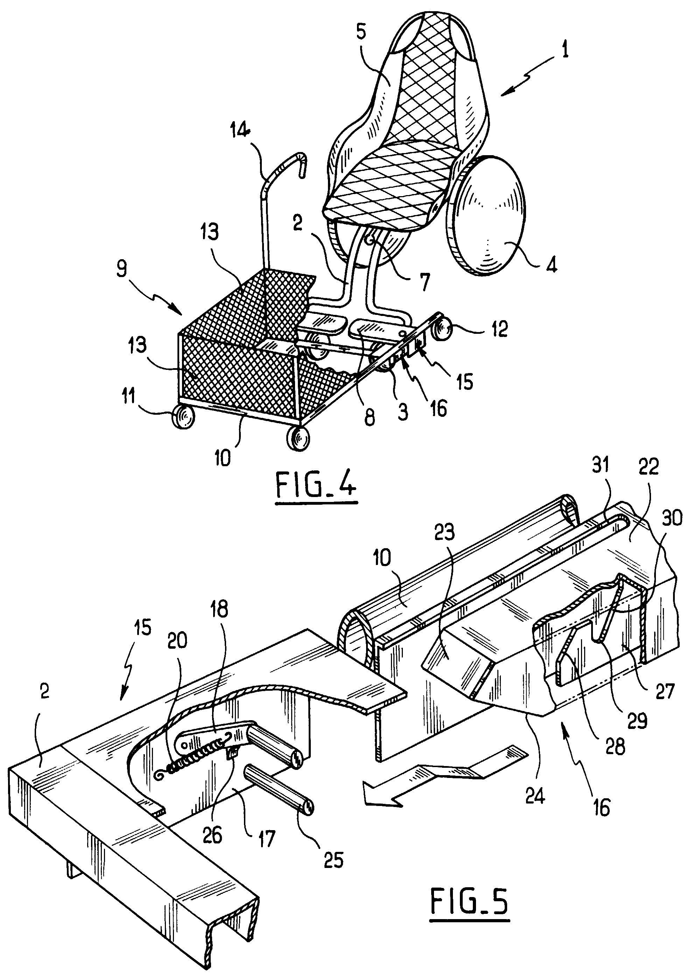

Un marchepied 8 est disposé près des roues avant 3 sur l'armature 2. Le marchepied 8 est constitué de deux plaques montées sur l'armature 2 pour pivoter dans un plan horizontal entre une position escamotée et une position d'utilisation, illustrée plus particulièrement à la figure 4, dans laquelle elles sont rappelées élastiquement. Ainsi, si l'utilisateur se tenant debout au moment de s'asseoir dans le fauteuil roulant 1, amène le fauteuil derrière lui, les plaques de marchepied 8, venant au contact de ses talons, vont pivoter vers leur position escamotée afin de faciliter l'installation de l'utilisateur en lui permettant de se tenir plus près de l'assise de la coque 5 lorsqu'il va s'asseoir. Les plaques sont rappelées élastiquement en position d'utilisation lorsque l'utilisateur les libérera en soulevant ses jambes pour les mettre sur le marchepied 8.

La partie avant de la coque 5, les roues avant 3, le marchepied 8 et la partie de l'armature 2 dont ils sont solidaires constituent la partie avant du fauteuil roulant 1.

L'ensemble utilitaire selon l'invention comporte aussi un chariot de transport généralement désigné en 9.

Le chariot de transport 9 comprend un bâti 10 porté par deux roues arrière 12 parallèles et fixes, et deux roues avant 11. Les deux roues avant 11 peuvent pivoter librement autour d'un axe vertical. Bien que les moyens d'appui de la partie arrière du chariot de transport 9 aient été représentés par les roues 12, ces moyens d'appui auraient pu être réalisées par des béquilles.

Des parois verticales 13, solidaires du bâti 10 près des roues avant 11, définissent un panier pour la réception et le stockage des marchandises.

Deux poignées 14, s'étendant verticalement, sont solidaires du bâti 10 de telle sorte que leur projection au sol est comprise entre les roues avant 11 et arrière 12. Cette disposition permet d'utiliser le chariot de transport sans le fauteuil, à la manière d'un déambulateur, la personne à mobilité réduite s'appuyant alors sur les poignées 14, situées à l'aplomb de la surface de sustentation du chariot de transport 9 définie par les roues avant 11 et arrière 12.

Le fauteuil roulant 1 comporte, dans les modes de réalisation décrits, deux jeux de moyens spécifiques d'attelage, généralement désignés en 15, disposés de part et d'autre du fauteuil. Le chariot de transport 9 comporte lui aussi deux jeux de moyens spécifiques d'attelage, généralement désignés en 16, disposés en correspondance de ceux du fauteuil roulant 1.

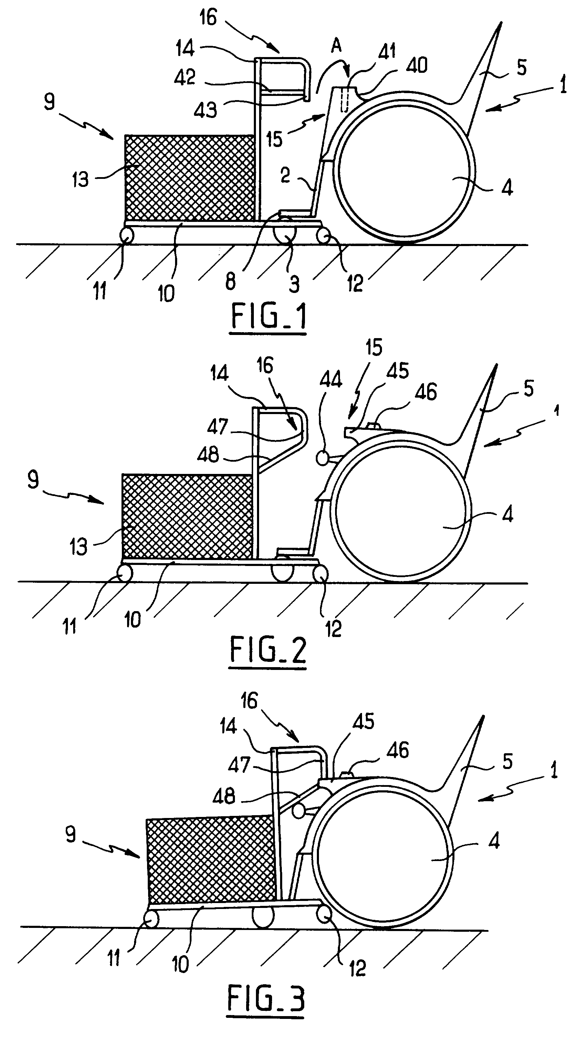

En référence à la figure 1, et selon un premier mode de réalisation de l'ensemble utilitaire selon l'invention, les moyens spécifiques d'attelage 15 portés par le fauteuil roulant 1, comportent de chaque côté du fauteuil roulant un organe support 40 solidaire de la coque 5 à l'avant du fauteuil roulant 1. Un orifice 41 vertical est réalisé dans chaque organe support 40.

Les moyens spécifiques d'attelage 16 portés par le chariot de transport comprennent un pion 43 disposé sur la partie basse 42 de chaque poignée 14, en correspondance des orifices 41.

Pour atteler le chariot de transport au fauteuil roulant, l'usager doit soulever la partie arrière du chariot de transport 9 par les poignées 14 et insérer chaque pion 43 dans un orifice 41 (mouvement représenté par la flèche A). La partie basse 42 de chaque poignée 14 repose alors sur l'organe support 40 correspondant et les roues arrière 12 du chariot de transport sont décollées du sol.

En référence aux figures 2 et 3, et selon un second mode de réalisation de l'invention, les moyens spécifiques d'attelage 15 comportent, de chaque côté du fauteuil roulant, une came 44 et une mâchoire d'encliquetage 45 commandée par une gâchette de déverrouillage 46.

Les moyens spécifiques d'attelage 16 comportent, en regard des moyens spécifiques d'attelage 15, une rampe de soulèvement 48 du chariot et un élément de retenue 47 solidaire de chaque poignée 14 du chariot de transport 9.

Pour atteler le chariot de transport 9 au fauteuil roulant 1, l'usager doit tirer sur les poignées 14 du chariot de transport 9 pour le rapprocher du fauteuil. Ce faisant, il fait glisser chaque rampe de soulèvement 48 sur la came 44 en regard provoquant ainsi le soulèvement de la partie arrière du chariot de transport 9. Poursuivant le mouvement de traction, l'usager amène les éléments de retenue 47 dans les mâchoires d'encliquetage 45 qui se verrouillent automatiquement de façon connue en soi, retenant de ce fait les éléments de retenue 47.

Pour libérer les éléments de retenue 47 des mâchoires d'encliquetage 45, l'usager actionne chaque gâchette de déverrouillage 46. Les rampes de soulèvement 48 du chariot de transport 9 glissent le long des cames 44 et le chariot de transport 9 est ramené au sol par son propre poids.

En référence aux figures 4 et 5, et selon un troisième mode de réalisation de l'invention, un jeu de moyens spécifiques d'attelage 15 comprend une platine 17 verticale et solidaire d'une extrémité de l'armature 2 sous le marchepied 8.

Un cliquet 18 est monté pour pivoter entre une première position de verrouillage et une seconde position de libération autour d'un axe solidaire de la platine 17. Un ressort 20 est disposé entre le cliquet 18 et la platine 17 de manière à rappeler le cliquet dans sa première ou sa seconde position, celles-ci étant situées de chaque côté d'une position intermédiaire instable constituant un point dur dans le pivotement du cliquet 18 entre ses deux positions.

Un doigt 25, formant une came, de longueur supérieure à celle de l'extrémité du cliquet 18, est solidaire de la platine 17.

Le jeu de moyens spécifiques d'attelage 16 correspondant comporte une chape 22 en U retourné, mais pouvant revêtir une autre forme, solidaire du bâti 10. La chape 22 comprend, sur sa face supérieure un plan incliné 23 constituant une surface de glissement du cliquet 18. Le bord d'une des parois latérales de la chape 22 constitue une rampe de soulèvement 24 du chariot de transport 9. Une rainure de guidage 31 est ménagée sur la face supérieure de la chape 22. La rainure de guidage 31 a une largeur supérieure à l'épaisseur de la platine 17.

Une plaque 27 est fixée à l'intérieur de la chape 22, parallèlement aux parois latérales de ladite chape. Un bord de la plaque 27 comprend une encoche 29 et une surface de glissement 30 du cliquet 18 de forte inclinaison. La première position de verrouillage du cliquet 18 est obtenue lorsque le cliquet 18 est en appui dans l'encoche 29 ou lorsque le cliquet 18 est en appui sur l'élément saillant 26 solidaire de la platine 17 selon que le chariot de transport 9 est attelé ou non au fauteuil roulant 1. La seconde position de libération du cliquet 18 est obtenue quand, le chariot de transport 9 étant attelé au fauteuil roulant 1, le cliquet 18 est en appui sur la face interne supérieure de la chape 22.

Pour atteler le chariot de transport 9 au fauteuil roulant 1, l'utilisateur amène la partie avant du fauteuil roulant 1 en regard de la partie arrière du chariot de transport 9. En exerçant une traction sur les poignées 14, il rapproche le chariot de transport 9 du fauteuil roulant 1. Les jeux de moyens spécifiques d'attelage 15 et 16 en correspondance sont alors rapprochés les uns vers les autres, si bien que chaque platine 17 est introduite dans la rainure de guidage 31 correspondante. Chaque chape 22 arrive en contact du doigt 25 correspondant qui, glissant le long de la rampe de soulèvement 24, provoque le décollement du sol des roues arrière 12 tandis que les roues avant 11 restent en contact avec le sol.

L'utilisateur tirant toujours les poignées 14 vers lui poursuit le mouvement de rapprochement. Chaque cliquet 18, alors dans sa première position de verrouillage, est amené au contact du profil 28 de la plaque 27 correspondante et glisse sur ce profil provoquant un pivotement partiel du cliquet 18 vers sa position intermédiaire. Le cliquet 18 tombe alors dans l'encoche 29 de la plaque 27, rappelé dans sa première position de verrouillage sous l'action du ressort 20.

Le chariot de transport 9 est alors attelé au fauteuil 1 et l'utilisateur peut alors mouvoir l'ensemble utilitaire ainsi formé autour des étals.

Pour dételer le chariot de transport 9 du fauteuil roulant 1, l'utilisateur exerce une traction sur les poignées 14. Ce faisant, il fait monter chaque cliquet 18 le long de la surface de glissement 30 correspondante provoquant ainsi le pivotement de chaque cliquet 18 au-delà de sa position intermédiaire. Sous l'action du ressort 20, le cliquet 18 est amené dans sa seconde position de libération. Le cliquet 18 est alors en appui sur la face interne supérieure de la chape 22. L'utilisateur exerce alors une poussée sur les poignées 14. Chaque cliquet 18 glisse alors le long de la face interne supérieure de la chape 22 correspondante jusqu'à être amené en appui sur la face interne du plan incliné 23. Ceci provoque le pivotement du cliquet 18 au-delà de sa position intermédiaire et sous l'action du ressort 20, le cliquet 18 pivote jusqu'à sa première position de verrouillage, en appui sur l'élément saillant 26. Sous l'effet de la poussée de l'utilisateur, chaque doigt 25 glissant le long de la rampe de soulèvement 24 correspondante amène les roues arrière 12 au contact du sol.

Bien entendu l'invention n'est pas limitée au mode de réalisation décrit et on peut y apporter des variantes de réalisation sans sortir du cadre de l'invention telle que définie par les revendications.

En particulier, bien que l'invention ait été décrite en relation avec une utilisation en centre commercial, cette utilisation n'est nullement limitative et peut être étendue à tout lieu public pouvant impliquer le transport d'une charge tel que les gares, les aéroports...

## Revendications

1. Ensemble utilitaire pour personne à mobilité réduite comprenant un fauteuil roulant (1) et un chariot de transport (9) dont une partie arrière comporte des moyens d'appui (12) sur le sol et est attelable de manière détachable à une partie avant du fauteuil (1), caractérisé en ce que la partie avant du fauteuil (1) et la partie arrière du chariot (9) comportent des moyens spécifiques d'attelage (15, 16) en correspondance les uns des autres de sorte que la partie arrière du chariot (9) soit maintenue attelée au fauteuil (1) dans une position où les moyens d'appui (12) sont écartés du sol.

2. Ensemble utilitaire selon la revendication 1, caractérisé en ce que l'un des chariot (9) ou fauteuil (1) comporte au moins une rampe de soulèvement (24, 48) du chariot (9) par rapport au fauteuil (1) tandis que l'autre comporte une came (25, 44) de sorte que la rampe (24, 48) et la came (25, 44) coopèrent par glissement relatif lors d'un mouvement de rapprochement du chariot (9) et du fauteuil (1) et en ce que l'un des chariots (9) ou fauteuil (1) comporte un premier organe d'encliquetage (45, 18) tandis que l'autre comporte un second organe d'encliquetage (47, 27) coopérant avec le premier organe d'encliquetage (45,18) à la fin du glissement relatif de la came (25, 44) et de la rampe (24, 48) dans le sens de rapprochement du fauteuil (1) et du chariot (9).

3. Ensemble utilitaire selon la revendication 2, caractérisé en ce que les organes d'encliquetage comportent des moyens de commande (46, 30) de leur libération mutuelle.

4. Ensemble utilitaire selon la revendication 3, caractérisé en ce que les moyens de commande sont constitués par au moins une poignée (46) activable par l'usager.

5. Ensemble utilitaire selon l'une quelconque des revendications 2 ou 3, caractérisé en ce que la partie avant du fauteuil comporte un marchepied (8) tandis que la came est formée par au moins un doigt (25) disposé sous le marchepied (8), la rampe de soulèvement (24) étant portée par la partie arrière du chariot de transport (9) en correspondance avec le doigt (25) et en ce que le premier organe d'encliquetage comporte un cliquet (18) pivotant rappelé élastiquement dans une première position stable de verrouillage et une seconde position stable de libération de l'attelage, le second organe étant constitué par une plaque (27) à encoche (29) portée par le chariot et comportant en avant de l'encoche (29) dans le sens de l'attelage une surface de glissement (23) du cliquet dans sa première position stable.

6. Ensemble utilitaire selon la revendication 5, caractérisé en ce que la plaque (27) comporte à l'arrière de l'encoche (29) dans le sens susdit une surface de glissement (30) du cliquet (18) pour le faire passer de sa première à sa seconde position stable lors d'une poursuite du mouvement de rapprochement du chariot et du fauteuil.
